Europäisches Patentamt

European Patent Office

Office européen des brevets

(11) Publication number: **0 155 056**
**B1**

# (12) EUROPEAN PATENT SPECIFICATION

(45) Date of publication of patent specification: **12.07.89**

(51) Int. Cl.⁴: **B 01 D 3/16**

(21) Application number: **85200340.9**

(22) Date of filing: **08.03.85**

(54) Gas/liquid contacting column.

(30) Priority: **14.03.84 GB 8406634**

(43) Date of publication of application:
**18.09.85 Bulletin 85/38**

(45) Publication of the grant of the patent:
**12.07.89 Bulletin 89/28**

(84) Designated Contracting States:
**DE FR GB NL**

(56) References cited:
**EP-A-0 092 262**
**DD-B- 138 004**
**US-A-2 247 485**
**US-A-2 394 679**
**US-A-3 197 286**
**US-A-3 972 966**

(73) Proprietor: **SHELL INTERNATIONALE
RESEARCH MAATSCHAPPIJ B.V.**
**Carel van Bylandtlaan 30**
**NL-2596 HR Den Haag (NL)**

(72) Inventor: **Bentham, Jeremy Birkett**
**Carel van Bylandtlaan 30**
**NL-2596 HR The Hague (NL)**

(74) Representative: **Aalbers, Onno et al**
**P.O. Box 302**
**NL-2501 CH The Hague (NL)**

Courier Press, Leamington Spa, England.

## Description

The invention relates to a gas/liquid contacting column having its interior provided with perforated gas/liquid contacting trays for effecting intimate contact between liquid and gas flowing countercurrently through said column.

More in particular, the present invention relates to a vertically extending gas/liquid contacting column having a plurality of substantially horizontal, vertically spaced, trays, each tray having a plurality of apertures for the passage of ascending gas and at least one downcomer for discharging liquid, to the space below the tray, which downcomer extends partly above and partly below the tray, which downcomer is open at its upper end and provided with liquid discharge openings at its lower end.

In operation, liquid is introduced at the top of the column and the gas phase at the bottom of the column, so that the difference in density constitutes a driving force causing the liquid and the gas to flow countercurrently through the column. The trays define a series of active areas wherein the liquid and the gas are brought together in intimate admixture for contacting in order to establish mass transfer between the two phases.

The term "gas" as used throughout this specification and the claims is to be understood to include vapour or liquid of lower density.

Columns of the above-mentioned type are used in distillation, absorption and stripping. Examples of trays which may be applied in such a column are grid trays, sieve trays which are formed of plates having circular or other apertures for gas passage, and valve trays which are trays provided with valves which are displaceably arranged in the tray-apertures. Liquid is transferred from one tray level to another via downcomers, mounted in openings of the trays. The liquid discharge openings in the lower parts of the downcomers are so arranged that these openings are properly sealed by stagnant liquid against upward flow of gas during operation of the column. The downcomers extend partly above the relevant trays to establish a liquid level on the trays in the active areas.

If the contacting trays are to accomplish their mass transfer function efficiently they should be supplied with de-gassed liquid from the tray above in order to minimize transfer of vapour to the tray below. The downcomers in which the liquid from the active areas is collected should allow the separation of the liquid and gas phases within them.

The maximum capacity of a column provided with contacting trays having downcomers is reached when either the dispersion of liquid and gas fills the whole space between adjacent trays, resulting in flooding of the column, or when the pressure drop over the trays can no longer be balanced by liquid hold-up in the downcomers, also resulting in flooding of the column.

Within the oil and gas industries there are a number of operations involving countercurrent gas/liquid contacting under conditions of high gas density and low interfacial tension between the liquid phase and the gas phase, for example fractionation near the critical region. Another example is extractive distillation and yet another liquid-liquid extraction. These operations have traditionally been a source of concern with regard to both capacity and operational stability. Over a wide range of conditions it has been found that for a given liquid flow rate, the maximum possible gas loading through a given tray is determined from a constant maximum load factor. High pressure operation however may cause a sharp decrease of the load factor at maximum capacity, due to a decrease of the density differences between the fluid phases.

The object of the invention is to provide a gas/liquid contacting column which is suitable for high pressure operation in that the adverse influence of high pressure on the maximum capacity of the column is eliminated or at least minimized.

In the gas/liquid contacting column according to the invention the downcomers are each provided with at least one gas passage having a plurality of gas entries at different levels in the downcomer and at least one gas outlet above the upper end of the downcomer.

During operation gas that has been carried with the liquid into the downcomers can escape via the gas passages to the space above the tray and thus is not carried with the liquid to the next lower tray.

The principle of venting entrained gas from the downcomers in trayed columns is known as such from US patent specification 2,247,485. The known venting system however is only suitable for moderate pressure operation and fails to provide substantial benefits at high pressure operations where the density difference between liquid and gas have become small. In the known venting system entrained gas is discharged from the downcomer at a level directly adjacent the bottom of the weir of the downcomer. The weir is that part of the downcomer sidewall that extends above the tray. The known vent system relieves the pressure which can build up between the liquid flow into the downcomer and the weir at high liquid loads. This pressure build-up is normalled denoted with the expression "pressure under the nappe of the weir". Such a vent system for relieving the pressure under the nappe is effective for increasing the maximum liquid load at low and moderate pressure operations. At low and moderate pressures, liquid falls over the weir of the downcomer by gravity while substantially not being hampered by the gas. The liquid throw over the weir increases with increasing liquid flow-rate, and eventually reaches the opposite downcomer weir. At low liquid rates there is ample downcomer cross section for removal of disengaged gas. As the liquid rate is increased the space available for upwardly flowing disengaged gas is reduced to pockets of cross-section which become available in a random manner. Eventually the entry side of the downcomer is completely closed, and a build-up of pressure due to disengaged gas between the liquid flow and the downcomer weir takes place. This pressure under the nappe forces the liquid flow upward and has the effect of increasing the required head on the weir. By venting the gas that causes the pressure under the nappe a lower liquid level may be maintained over the weir thereby effectively increasing the liquid capacity compared to an unvented system.

At high pressures the behaviour in the downcomer is however quite different from the one described above. At low and moderate pressures the drag forces on the liquid droplets entering into the downcomer is relatively low and the liquid is substantially not hampered in its downward flow by the stationary gas in the downcomer. As, however, the gas density increases and the surface tension between liquid and gas decreases, the drag forces become more important. As an absolute limit, the maximum throughput of a column may well be determined by the point at which the gas velocity becomes equal to the maximum liquid terminal falling velocity. This is the reason why the capacity of liquid/liquid columns is often correlated with the terminal velocity of the dispersed liquid phase. If the drag forces are sufficiently high, the liquid droplets very quickly reach their terminal falling velocity. The flow in the upper, liquid-dispersed, regions of the downcomer may be approximately described by the following equation:

$$\frac{U_{dc}}{\alpha_d} - \frac{U_g}{1-\alpha_d} = (1-\alpha_d)V_{d\infty}$$

where

$U_{dc}$ = superficial downcomer liquid velocity =

$$\frac{\text{volumetric amount of liquid per unit time}}{\text{total cross-sectional area of the downcomer}}$$

$U_g$ = superficial downcomer vapour velocity
$V_{d\infty}$ = liquid droplet terminal fall velocity
$\alpha_d$ = dispersed (liquid) phase volume fraction
Setting $U_g = O$ for no vapour carry under (i.e. no vapour is carried with the liquid from the downcomer to the next-lower tray) the following simplified equation can be written:

$$U_{dc} = \alpha_d(1-\alpha_d)V_{d\infty}.$$

For constant $V_{d\infty}$, this equation predicts that $U_{dc}$ is maximized if $\alpha_d$ is equal to 0.5.

If $\alpha_d = 0.5$ then $U_{dc} = 0.25\ V_{d\infty}$ for no vapour carry-under.

From this equation it seems likely that substantial vapour carry-under will occur if $U_{dc}/V_{d\infty}$ is greater than 0.25. Experiments have been carried out in which the liquid fraction was measured at the bottom of a downcomer for a wide range of high pressure systems. From these experiments it could be seen that the expression above indicates the onset of substantial vapour carry-under rather well. It has now been discovered by Applicant that the maximum downcomer liquid load in high pressure gas/liquid contact columns can be made largely independent from the gas pressure by allowing some gas to flow with the liquid into the downcomer and venting the gas at a lower level from the downcomer. In this way the gas and the liquid flow co-currently to the upper part of the downcomer, thus substantially reducing the resistance to the flow of liquid. It will be understood that the gas should preferably be removed from the downcomer at a level as low as possible, closely adjacent to the liquid level during operation of such a column.

The invention will now be discussed by way of example only with reference to the accompanying drawings, in which

Figure 1 shows a vertical section of an intermediate part of a trayed column according to an embodiment of the invention;

Figure 2 shows cross section II—II of Figure 1;

Figure 3 shows a perspective view of a downcomer provided with gas discharge means according to another embodiment of the invention.

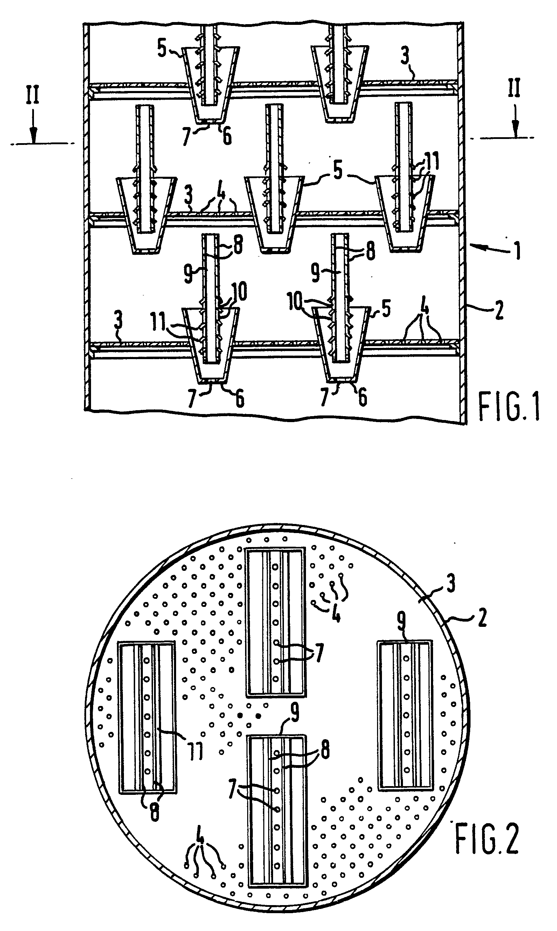

Referring to Figure 1 part of a vertically extending column 1 with cylindrical sidewall 2 is shown. The column is provided with a plurality of horizontal contact trays 3 arranged one above the other at suitable intervals, e.g. 150 to 750 mm, and extending over substantially the whole cross-section of the column. Each of the trays 3 is provided with a plurality of apertures 4 forming passages for upward flowing gas. These apertures 4 are substantially uniformly distributed over the active areas of the trays and may have any suitable shape, and consist e.g. of slits or circular holes. The apertures are of uniform size and are spaced apart from each other in such a way to provide an aggregate area, that is the active area of the trays, appropriate to the loading conditions at which the column is to be operated. The portions of the trays 3 with the apertures 4 for the passage of gas constitute the active areas of the trays 3, i.e. above these areas liquid and gas are intensively mixed with each other for the exchange of matter and/or heat between said two fluid phases.

Adjoining the active tray areas there is on each tray 3 a plurality of oblong downcomers 5 for descending liquid. The downcomers pass through the tray to a predetermined height above the upper surface of the tray and a predetermined distance below the lower surface of the tray. The part of a downcomer extending above the tray is normally indicated with the expression weir. The downcomers are open at their upper ends, while their lower ends are formed by bottom walls 6 provided with a plurality of liquid discharge openings 7. The liquid discharge openings 7 are distributed over the bottom walls 6 of the downcomers 5 so as to discharge liquid substantially uniformly over the length of said downcomers. The aggregate area of the liquid discharge openings in each downcomer 5 should be sufficient for discharging all of the liquid flowing downwards through the column at the intended liquid loading and should be restricted with respect to the horizontal cross-sectional areas of the lower parts of the downcomers so as to maintain during operation of the column in said downcomer a column of liquid exerting at the liquid discharge openings 7 a hydrostatic head which is sufficient for preventing ascending gas from entering into the downcomer via said openings 7. The downcomers are further provided with splashing baffles to prevent the liquid from jumping from one side of a downcomer to the active tray area at the opposite side of the downcomer. These splashing baffles 8 consist of two vertical parallel walls arranged at some distance from one another to form a gas passage 9. The upper ends of the baffles 8 should preferably extend above the froth of liquid and gas formed above the tray upon operation of the column at maximum capacity, e.g. one could arrange the upper ends of the baffles 8 closely to the lower surface of the next higher tray 3. The distance between the two baffles 8 should be chosen such that the velocity of upward flowing gas is relatively small so that liquid entrained with the gas in the gas passage 9 is separated from the ascending gas by gravity flow. Each pair of parallel baffles 8 is preferably centrally arranged with respect to the downcomer in which the baffles are located. The baffles may be mounted on the downcomer walls by any suitable means such as supporting strips. The baffles 8 are further provided with a plurality of vertically spaced slit-shaped gas entries 10. To prevent entry of liquid into these entries 10 downwardly inclined walls 11 are provided in the baffles 8 at the upper ends of said entries 10.

During operation of the column gas flows in upward direction via the apertures 4 in the trays 3, whilst liquid descends through the column via the downcomers 5. At low pressures the liquid from the froth formed above the active areas of the trays will substantially not be hindered by gas upon entry into the downcomers 5. If the column is operated at higher pressure the density difference between gas and liquid decreases, so that the drag forces on the liquid droplets become more important. As a consequence of the reduction in terminal falling velocity of the liquid droplets, the liquid-handling capacity of the downcomer is decreased if no specific measures are proposed in the present application are taken. As already discussed in the above the increased resistance to liquid flow may lead to premature flooding of the column. Furthermore even at lower than maximum loading the liquid droplets will form a barrier resisting the upward flow of entrained gas. A consequence thereof would be the passages of gas with liquid through the downcomer openings, which phenomenon is usually indicated with the expression vapour carry-under.

On account of the arrangement of the baffles 8 in the downcomer 5 the above problem of vapour carry-under occurring at high gas loads is overcome. Due to the presence of the gas passages, formed by the gas entries 10 and the space between the baffles 8, gas present in the downcomer and blocked by the liquid droplets entering into the downcomer will flow towards the entries 10 and will escape from the downcomer via the gas passages 9 towards a location above the froth on the tray. This gas flow will have the effect of reducing the resistance to flow of the liquid droplets and thus helping the liquid to enter into the downcomer. The liquid droplet terminal fall velocity is artificially increased due to the forced downward gas flow so that the superficial downcomer liquid velocity can increase also without the risk of vapour carry-under.

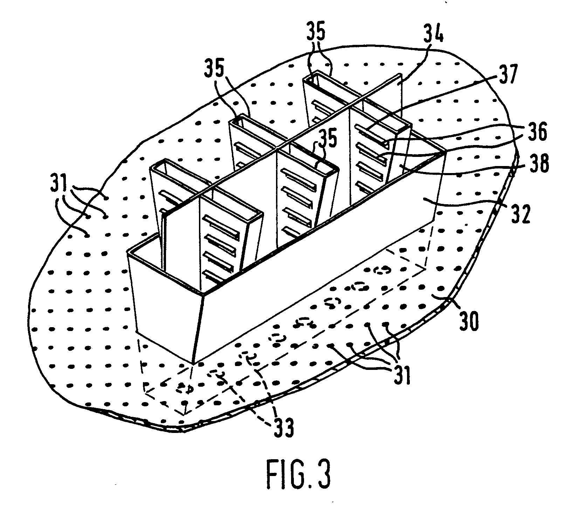

Reference is now made to Figure 3 showing a perspective view of part of a column tray with alternative gas disengagement means. Due to the distance the gas has to travel to the disengagement means, an arrangement such as shown in Figures 1 and 2, would normally be preferred over this second embodiment.

In Figure 3, the column tray part indicated with reference numeral 30 is provided with apertures 31 for ascending gas and an oblong downcomer 32 with bottom openings 33 for descending liquid. The downcomer 32 is provided with a splash baffle 34 known as such, to prevent liquid from jumping over the downcomer and to cause a pre-separation of gas from liquid prior to entry of the liquid into the downcomer. In this embodiment of the invention the gas passages for the escape of gas from the downcomer form an integral part of the splash baffle supporting means and consist of pairwise arranged baffles 35 secured to the splash baffle 34 and the sidewalls of the downcomers 32. The baffles 35 are provided with gas entries 36 substantially uniformly distributed over the height of the baffles. For protecting the entries 36 against entry of liquid, inclined walls 37 are arranged blanking off said entries. The baffles 35 are pairwise interconnected via closed endwalls 38 secured to the downcomer sidewalls. The spaces enclosed by each pair of baffles 35, endwall 38 and splash baffle 34 serve as gas passages enabling the disengagement of gas from the downcomer. Thereto the upper ends of baffles 34, 35 and 38 extend upwardly beyond the froth of liquid and gas generated during operation.

For operation of this type of gas passages shown in Figure 3 reference is made to the description given with respect to the embodiment of the invention shown in Figures 1 and 2.

The above examples of gas passages with lateral entries in the baffles defining the gas passages is advantageous for operating at relatively large liquid load fluctuations wherein the liquid level in the downcomers can fluctuate largely.

It will be clear the the splash baffle 34 in this embodiment could be omitted without departing from the scope of the invention.

**Claims**

1. Vertical column for contacting a gas with a liquid comprising a plurality of vertically spaced horizontal trays, each having a plurality of apertures for the passage of ascending gas and at least one downcomer for discharging liquid to the space below the tray, which downcomer extends partly above and partly below the tray, which downcomer is open at its upper end and provided with liquid discharge openings at its lower end, characterized in that the downcomers are each provided with at least one gas passage having a plurality of gas entries at different level in the downcomer and at least one gas outlet above the upper end of the downcomer.

2. Column as claimed in claim 1, in which the downcomer is elongated in horizontal direction and the gas passage is formed between two vertical splashing baffles extending over the full length of the downcomer.

3. Column as claimed in claim 1, in which the downcomer is elongated in horizontal direction and comprises a plurality of gas passages, each formed between two parallel vertical baffles that extend perpendicular to the downcomer's length axis.

4. Column as claimed in claim 2 or 3, in which each gas entry extends over the length of a baffle and has its upper end bound by a downwardly inclined wall.

## Patentansprüche

1. Vertikale Kolonne zum in Berührungbringen eines Gases miteiner Flüssigkeit, die eine Vielzahl von durch vertikale Zwischenräume getrennte horizontale Böden umfaßt, von denen jeder eine Vielzahl von Öffnungen für den Durchgang des aufsteigenden Gases und wenigstens eine Ableitung zur Abgabe von Flüssigkeit an den Raum unterhalb des Bodens aufweist, wobei sich die Ableitung teilweise über und teilweise unter den Boden erstreckt und an ihrem oberen Ende offen und an ihrem unteren Ende mit Öffnungen zur Abgabe von Flüssigkeit ausgestattet ist, dadurch gekennzeichnet, daß die Ableitungen jeweils mit wenigstens einem Gasdurchgang mit einer Vielzahl von Gaseintritten in verschiedenen Niveaus der Ableitung und mit wenigstens einem Gasauslaß oberhalb des oberen Endes der Ableitung ausgestattet sind.

2. Kolonne, wie in Anspruch 1 beansprucht, worin die Ableitung in horizontaler Richtung verlängert ist und der Gasdurchgang zwischen zwei vertikalen Spritzblechen ausgebildet ist, die sich über die volle Länge der Ableitung erstrecken.

3. Kolonne, wie in Anspruch 1 beansprucht, worin die Ableitung in horizontaler Richtung verlängert ist und eine Vielzahl von Gasdurchgängen umfaßt, von denen jede zwischen zwei parallelen vertikalen Blechen gebildet ist, die sich senkrecht zur Längsachse der Ableitung erstrecken.

4. Kolonne, wie in Anspruch 2 oder 3 beansprucht, worin sich jeder Gaseintritt über die Länge eines Blechs erstreckt und hinsichtlich seines oberen Endes durch eine abwärts geneigte Wand begrenzt ist.

## Revendications

1. Colonne verticale pour mise en contact d'un gaz avec un liquide comprenant une multiplicité de plateaux horizontaux espacés verticalement, ayant chacun une multiplicité d'ouvertures pour le passage d'un gaz ascendant et au moins un trop-plein pour le déchargement de liquide vers l'espace situé au-dessous du plateau, ce trop-plein s'étendant partiellement au-dessus et partiellement au-dessous du plateau et ce trop-plein étant ouvert à son extrémité supérieure et comportant des ouvertures de décharge de liquide à son extrémité inférieure, caractérisée en ce que les troppleins comportent chacun au moins un passage pour gaz ayant une multiplicité d'entrées pour gaz à des niveaux différents dans le trop-plein et au moins une sortie pour gas au-dessus de l'extrémité supérieure du trop-plein.

2. Colonne selon la revendication 1, dans laquelle le trop-plein est allongé en direction horizontale et le passage pour gas est formé entre deux écrans anti-éclaboussement verticaux s'étendant sur toute la longueur du trop-plein.

3. Colonne selon la revendication 1, dans laquelle le trop-plein est allongé en direction horizontale et comprend une multiplicité de passages pour gaz, formés chacun entre deux écrans verticaux parallèles qui s'étendant perpendiculairement au grand axe du trop-plein.

4. Colonne selon la revendication 2 ou 3, dans laquelle chaque entrée pour gas s'étend sur la longueur d'un écran et a son extrémité supérieure limitée par une paroi inclinée vers le bas.

FIG.1

FIG.2

1

FIG.3